# EUROPEAN PATENT APPLICATION

(11) **EP 0 926 363 A1**
(43) Date of publication of application: **30.06.1999**
(21) Application number: 97830688.4
(22) Date of filing: 19.12.1997
(51) Int. Cl.: F16C 1/00, F16C 1/26

(54) **A system for fixing the sheath of a "Bowden" cable to a reaction element**

(71) Applicant: Automotive Products (Italia) S.p.A., 17014 Cairo Montenotte (Savona) (IT)
(72) Inventor: Giardina Vincenzo, 17014 Cairo Montenotte Savona (IT); Matteis, Davide, 17010 Cengio Savona (IT)
(74) Representative: Perani, Aurelio

(57) **Abstract**

A system for fixing the sheath (2) of a "Bowden" cable (1) to a reaction element (18) in flexible transmissions for mechanical controls.

The system comprises a female tubular bush (8) fixed to the reaction element (18), for example, the support plate of a drum brake, a male tubular bush (3) fixed to the end of the sheath (2), as well as snap-engagement means (14, 7) carried by the internal surface (9a) of the female tubular bush (8) and by the external surface (6a) of the male tubular bush (3), respectively, for mutual engagement thereof in a manner such as to permit axial assembly and disassembly without damage.

The system enables the transmission to be disassembled without damage to the constituent elements which can be re-used at the re-assembly stage.

## Description

The present invention relates to a system for fixing the end of the sheath of a "Bowden" cable to a reaction element.

"Bowden" cables are widely used in the mechanical field for flexible transmissions for controls, for example, for operating levers in opposition to biasing springs.

Amongst these applications, in the automotive field in particular, is that of the operation of the lever which acts, instead of the hydraulic cylinder, on the brake shoes inside a brake drum, rendering them operative upon the operation of the hand brake lever disposed in the passenger compartment of the vehicle.

According to the prior art, the end of the sheath of the cable to be connected to the reaction element has a bush which is anchored to the reaction element by the formation, in the element, of a hole in which the bush is engaged with interference.

As well as usually requiring suitable assembly tooling, this type of fixing has the disadvantage that, if it is disassembled, the same elements cannot be re-used and at least one of them has to be replaced.

In another fixing arrangement, for example, for use on a drum brake, the end of the sheath has a bush with unidirectional teeth which permit fixed mounting in a housing hole formed in a region of the brake support plate.

Whilst this solution permits quick assembly, it does not permit easy disassembly since, in order to release the bush, it involves the need for the unidirectional teeth which react against the brake support plate to be squashed from the other side of the plate.

The object of the present invention is to offer a solution which enables the end of the sheath of a "Bowden" cable to be connected to and disconnected from a reaction element quickly, at the same time preventing damage to the mechanical parts concerned so that they can be re-used.

This object is achieved by a system for fixing the end of the sheath of a "Bowden" cable to a reaction element, characterized in that it comprises a tubular female bush fixed in a hole formed in the reaction element, a male tubular bush fixed to the end of the sheath to be fixed to the reaction element, and snap-engagement means formed on the internal wall of the female tubular bush and on the external wall of the male tubular bush, respectively, for mutual engagement in a manner such as to permit axial assembly and disassembly.

The invention will now be described in greater detail with reference to a practical embodiment illustrated in the appended drawings, in which:
Figure 1 is a side view of the end of a sheath of a "Bowden" cable having a male bush according to the invention,
Figure 2 is a front view of the male bush of Figure 1,
Figure 3 is a perspective view of the female bush according to the invention,
Figure 4 is a section through the female tubular bush taken on the line IV-IV of Figure 5,
Figure 5 is a plan view of the female tubular bush of Figures 3 and 4,
Figure 6 is a partially-sectioned side view of a fixing according to the invention with the bushes coupled,
Figure 7 is a front view of the interior of a drum brake fitted with a cable with a sheath according to the invention for the operation of the hand-brake lever,
Figure 8 shows, in section, the region in which the sheath according to the invention is connected to the brake support plate of the drum brake of Figure 7.

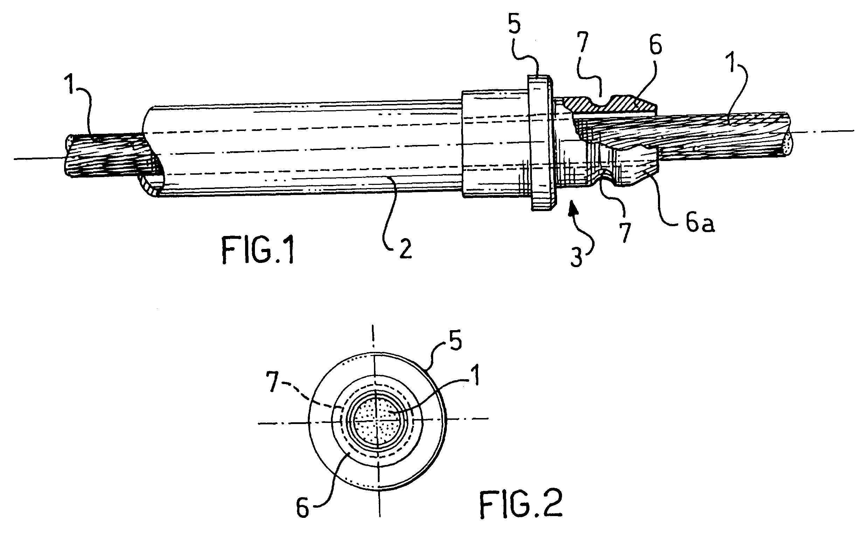

With reference to the drawings and, in particular, to Figures 1 and 2, a cable 1 formed by metal strands is enclosed within an axial sheath 2 forming what is generally known in the art as a "Bowden" cable used in flexible transmissions for controls.

At the end to be connected to a reaction element, the sheath 2 has a male tubular bush, generally indicated 3.

This bush comprises a portion 4 for clamping onto the sheath, a flange 5, and an opposed tubular portion 6.

This latter portion 6 has a circumferential groove 7 in its outer surface 6a.

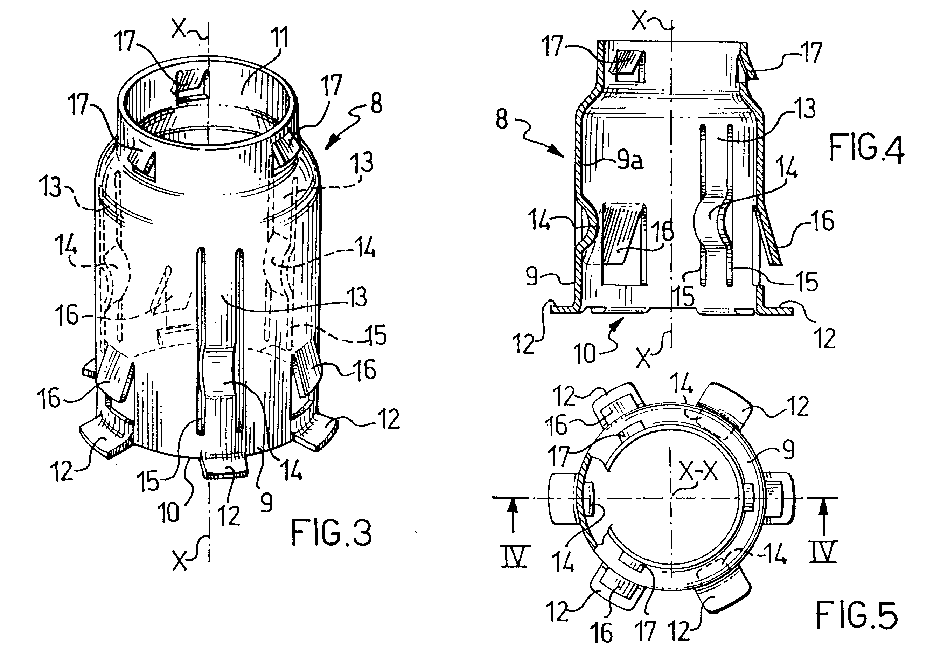

With reference to Figures 3, 4 and 5, the female tubular bush, generally indicated 8, is constituted by a body 9 with openings 10 and 11 at its ends.

In the region of the opening 10, the body 9 has a series of tabs 12 bent at an angle to the longitudinal axis X-X of the bush.

Domed projections 14 facing radially inwardly relative to the bush 8 are provided on the internal tubular surface 9a of the body 9 in axial regions 13 spaced circumferentially, for example, 120° apart. These domed projections 14 are arranged in the same transverse plane perpendicular to the axis X-X and are formed, for example, by deformation of the thickness of the wall of the body 9. The regions 13 carrying the projections 14 are rendered resiliently flexible by means of respective pairs of longitudinal slots 15 formed in the thickness of the wall of the body 9 and extending for a certain distance beside the projections 14. Finally, the tubular body 9 has conventional outwardly-projecting tabs 16 and 17 for the clamping of the bush 8 onto the reaction element, as will be explained in the following description.

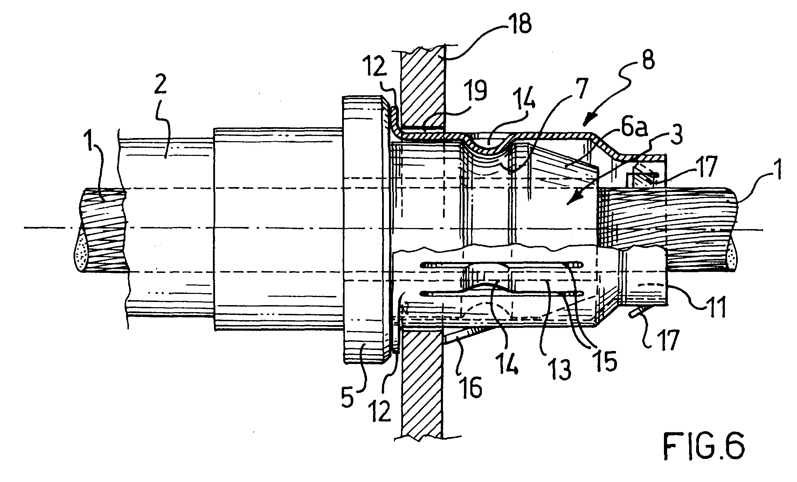

The tabs 16 and 17 are also spaced, for example, 120° apart around the circumference of the body 9. With reference to Figure 6, it can be seen that the sheath 2 is fixed to a reaction element 18 by the insertion of the female tubular bush 8 with interference in a housing hole 19 provided in the reaction element 18. The radial tabs 12, the clamping tabs 16 and the interference between the outside diameter of the bush 8 and the diameter of the hole 19 in practice fix the female tubular bush 8 firmly to the reaction element 18.

The sheath 2 is connected simply by the axial insertion of the male tubular bush 3 in the female tubular bush 8 until the groove 7 snaps into engagement with the projections 14 and the flange 5 is brought into abutment with the bent tabs 12.

The resilience conferred by the slots 15 on the regions 13 carrying the projections 14 allows the connection to be disassembled when necessary without causing damage to either of the two coupling elements.

The present invention can be used particularly advantageously, for example, in the field of vehicle brakes.

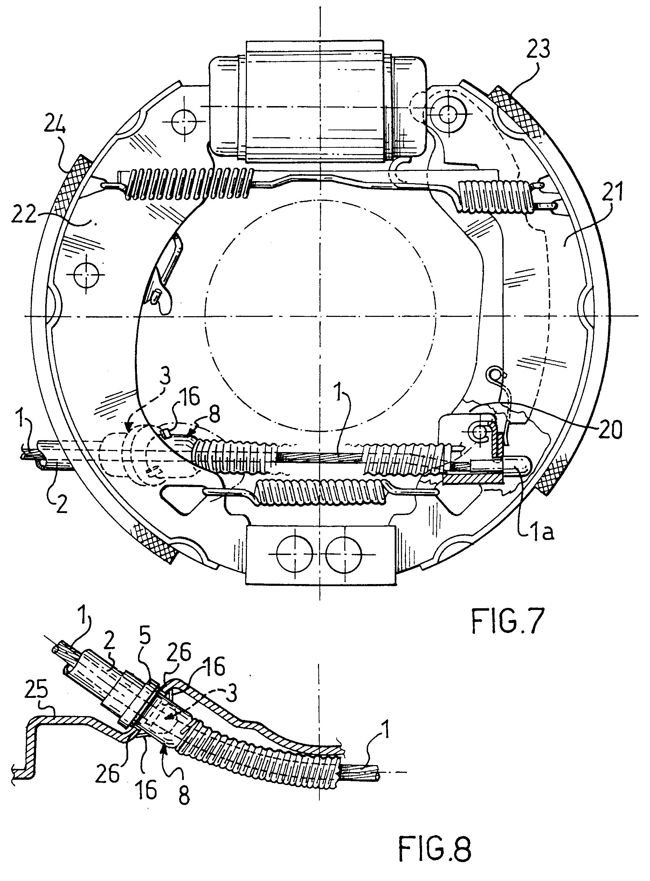

With reference to Figures 7 and 8, the metal-stranded cable 1 is connected to the lever 20 by its head end 1a, in conventional manner. In a drum brake such as that shown schematically in Figure 7, action imparted by the hand-brake lever, not shown in the drawings and disposed in the passenger compartment of a vehicle, is transmitted by the flexible cable 1 and, as a result, the lever 20 operates the shoes 21 and 22 provided with friction material 23 and 24.

The sheath 2 is fixed to the brake support plate 25 by axial insertion of the male tubular bush 3 in the female tubular bush 8, which is firmly anchored in a hole 26 in the brake-holder plate 25 in the manner described above.

Disassembly takes place quickly and in a practical manner without damage to the parts which can be re-used.

## Claims

1. A system for fixing the sheath (2) of a "Bowden" cable (1) to a reaction element (18, 25), characterized in that it comprises a female tubular bush (8) fixed in a hole (19, 26) formed in the reaction element (18, 25), a male tubular bush (3) fixed to the end of the sheath (2) to be fixed to the reaction element (18, 25), and snap-engagement means (14, 7) carried by the internal surface (9a) of the female tubular bush (8) and by the external surface (6a) of the male tubular bush (3), respectively, for mutual engagement in a manner such as to permit axial assembly and disassembly.

2. A fixing system according to Claim 1, characterized in that the snap-engagement means carried by the internal surface (9a) of the female tubular bush (8) are constituted by a plurality of projections (14) extending radially towards the longitudinal axis (X-X) of the female tubular bush (8), the projections (14) being positioned in the same transverse plane perpendicular to the longitudinal axis (X-X) of the bush (8).

3. A fixing system according to Claims 1 and 2, characterized in that the projections (14) are constituted by deformed portions (13) of the wall of the female tubular bush (8).

4. A fixing system according to Claims 1 to 3, characterized in that, beside each portion (13) of the female tubular bush (8) which is deformed to form a projection (14), there is at least one slot (15) formed in the thickness of the wall of the bush (8), the slots (15) rendering the portions (13) with projections (14) resiliently flexible.

5. A fixing system according to Claim 4, characterized in that each slot (15) extends parallel to the longitudinal axis (X-X) of the female tubular bush (8).

6. A fixing system according to Claims 1 to 5, characterized in that the female tubular bush (8) has clamping members (16, 17) for achieving fixing in the hole (19, 26) of the reaction element (18, 25).

7. A fixing system according to Claim 1, characterized in that the snap-engagement means carried by the external surface (6a) of the male tubular bush (3) is constituted by a circumferential groove (7).

8. A fixing system according to Claims 1 to 7, in which the reaction element is represented by the brake support plate (25) of a drum brake for vehicles.
